(19) Europäisches Patentamt

European Patent Office

Office européen des brevets

(11) **EP 1 510 374 A2**

(12) **EUROPÄISCHE PATENTANMELDUNG**

(43) Veröffentlichungstag:
02.03.2005 Patentblatt 2005/09

(51) Int Cl.⁷: **B60G 17/015**

(21) Anmeldenummer: 04014280.4

(22) Anmeldetag: 18.06.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **23.08.2003 DE 10338879**

(71) Anmelder: **WABCO GmbH & CO. OHG**
**30453 Hannover (DE)**

(72) Erfinder:
• **Franke, Torsten**
**31303 Burgdorf (DE)**
• **Heuer, Bernd**
**31171 Nordstemmen (DE)**

(74) Vertreter: **Schrödter, Manfred**
**WABCO GmbH & Co. OHG,**
**Postfach 91 12 62**
**30432 Hannover (DE)**

(54) **Verfahren zur Abschätzung einer Querbeschleunigung eines Fahrzeugs**

(57) Es wird ein Verfahren zur Abschätzung einer Querbeschleunigung eines Fahrzeugs, insbesondere eines Nutzfahrzeugs vorgeschlagen. Der abgeschätzte Wert der Querbeschleunigung dient insbesondere zur Verhinderung des Umkippens des Fahrzeugs in kritischen Fahrsituationen. Eine zu erwartende Querbeschleunigung wird aus dem Lenkwinkel und der Fahrzeuggeschwindigkeit mit Hilfe einer Berechnung oder einer Tabelle vorherbestimmt. Hierdurch ergibt sich ein Zeitvorsprung gegenüber einer gemessenen Querbeschleunigung, welcher zur frühzeitigen Abbremsung des Fahrzeugs durch eine Stabilitäts-Regelung (ESC) oder eine Umkippverhinderung (RSC) benutzt werden kann.

Fig. 2

**Beschreibung**

Die Erfindung bezieht sich auf ein Verfahren zur Abschätzung einer Querbeschleunigung eines Fahrzeugs gemäß dem Oberbegriff des Patentanspruchs 1.

Heutige Straßenfahrzeuge, insbesondere auch Nutzfahrzeuge, werden im zunehmenden Maße mit elektonischen Bremssystemen (EBS) ausgestattet. Bei diesen erfolgt die Signalübertragung vom Bremspedal zur EBS-Elektronik über eine elektrische Verbindungsleitung. Die Beaufschlagung der Bremszylinder mittels Druckmittel erfolgt über vorgeschaltete Magnetventile. Mit diesen kann der Bremsdruck gesteigert, gehalten oder gesenkt werden. Die Magnetventile werden elektrisch von der oben genannten EBS-Elektronik angesteuert.

Im Vergleich zu einer konventionellen, mechanischen Bremsanlage ist es bei einem EBS möglich, unabhängig vom Fahrer die Bremsen des Fahrzeugs mit Bremsmittel zu beaufschlagen und somit das Fahrzeug abzubremsen. Diese Möglichkeit wird von verschiedenen Systemen, die in das EBS integriert sein können, genutzt. Solche Systeme können zum Beispiel sein:

eine Abstandsregelung (Adaptive Cruise Control ACC), ein Antiblockiersystem (ABS), eine Anfahrschlupfregelung (ASR), eine Stabilitätsregelung (Electronical Stability Control ESC) oder eine Umkipp-Verhinderung (Rollover Stability Control RSC).

Die zuletzt erwähnte Umkipp-Verhinderung, die in die Stabilitätsregelung integriert sein kann, hat die Aufgabe, das Fahrzeug in schwierigen Fahr-Situationen vor einem Umkippen zu bewahren. Solche Situationen können beispielsweise das schnelle Durchfahren einer Kurve oder ein schneller Spurwechsel bei einem Überholmanöver sein. Durch die Umkipp-Verhinderung wird der Fahrer frühzeitig mittels einer Signaleinrichtung gewarnt und das Fahrzeug nötigenfalls zusätzlich durch Beaufschlagung aller oder einzelner Radbremsen verlangsamt und somit stabilisiert.

Bei einem bekannten Verfahren zur Verhinderung des Umkippens eines Fahrzeugs (DE 199 58 221 A1) wird eine kritische Querbeschleunigung bzw. Grenzbeschleunigung für das jeweilige Fahrzeug bestimmt. Während der Fahrt wird dann ständig die aktuelle Querbeschleunigung mittels eines Querbeschleunigungssensors oder aus den Werten von Radgeschwindigkeitssensoren bestimmt und mit der oben genannten Grenzbeschleunigung verglichen. Sobald etwa 75% der Grenzbeschleunigung erreicht sind, wird der Fahrer gewarnt und gegebenenfalls zusätzlich die Fahrgeschwindigkeit durch eine automatische Motordrosselung oder eine automatische Einbremsung verringert.

Aus der DE 42 40 557 C2 ist weiter ein Sicherheitssystem für Fahrzeuge mit einem Lenkwinkeldetektor, einem Geschwindigkeitsdetektor und einem Querbeschleunigungsdetektor bekannt. Mit Hilfe der Meßwerte für Fahrzeuggeschwindigkeit und der Querbeschleunigung werden aus einer Tabelle ein Sicherheitsbereich und ein Gefahrenbereich definiert. Falls das Fahrzeug aus dem Sicherheitsbereich in den Gefahrenbereich gelangt, wird eine Geschwindigkeits-Reduziereinrichtung des Fahrzeugs angesteuert.

Die für das bekannte Verfahren benutzte gemessene Querbeschleunigung wird dabei überprüft durch eine gleichzeitig berechnete Querbeschleunigung, die aus den Werten des Geschwindigkeitsdetektors und des Lenkwinkeldetektors gewonnen wird. Erst nach einer erfolgreichen Überprüfung wird anhand einer Tabelle festgestellt, ob ein Übergang in den Gefahrenbereich erfolgt ist. Falls dies erkannt wurde, erfolgt eine Fahrer-Warnung oder ein Bremseingriff.

Für die oben erläuterten Systeme zur Umkipp-Verhinderung ist es wesentlich, so frühzeitig wie möglich einzugreifen, also das Fahrzeug zu verlangsamen. Dies ist eine Voraussetzung, ein beginnendes Umkippen des Fahrzeugs noch verhindern zu können. Das heißt mit anderen Worten, ein etwaiger kritischer Wert der Querbeschleunigung muss möglichst früh in der ESC-Elektronik vorliegen und verarbeitet werden.

Der Erfindung liegt die Aufgabe zu Grunde, ein Verfahren zur Gewinnung einer Querbeschleunigungsgröße eines Fahrzeugs, insbesondere Nutzfahrzeugs anzugeben, welches möglichst früh einen kritischen Querbeschleunigungswert des Fahrzeugs erkennt.

Diese Aufgabe wird durch die im Patentanspruch 1 angegebene Erfindung gelöst. Die Unteransprüche enthalten zweckmäßige Weiterbildungen.

Bei hoher Fahrzeuggeschwindigkeit und dynamischer Lenkbewegung durch den Fahrer kann sich sehr schnell eine kippgefährdende Querbeschleunigung aufbauen. Die RSC-Funktion (Rollover Stability Control) hat dann nur wenig Zeit, die Fahrzeuggeschwindigkeit durch Bremsung so zu verringern, daß keine Kippgefahr mehr besteht. Wird daher, wie durch die Erfindung vorgeschlagen, nicht auf die momentane tatsächliche Querbeschleunigung, sondern auf die sich wahrscheinlich einstellende Querbeschleunigung abgestellt, so bedeutet dies einen vorteilhaften zeitlichen Gewinn. Der RSC-Funktion steht somit mehr Zeit zur Verfügung, die Fahrzeuggeschwindigkeit zu verringern.

Wie sich in Fahrversuchen gezeigt hat, lässt sich gemäß der Erfindung aus den Werten des Lenkwinkels und der Fahrzeuggeschwindigkeit eine zu erwartende Querbeschleunigung des Fahrzeugs bestimmen, welche der tatsächlichen, mit einem im Fahrzeug installierten Querbeschleunigungssensor gemessenen Querbeschleunigung vorauseilt. Dies gilt insbesondere dann, wenn der Querbeschleunigungssensor, wie bei Nutzfahrzeugen, insbesondere Sattelzügen üblich, relativ weit hinten, nämlich im Bereich des Ladungs-Schwerpunktes, angeordnet ist. So ist beispielsweise der Querbeschleunigungssensor bei dem Verfahren der DE 199 58 221 A1 unmittelbar vor der Hinterachse angeordnet.

Durch das erfindungsgemäße Verfahren lässt sich ein entscheidender zeitlicher Vorsprung von bis zu einigen 100 Millisekunden für die Reaktion eines Fahrzeug-Stabilitätssystems auf ein drohendes Umkippen des Fahrzeugs erzielen. Eine mit dem erfindungsgemäßen Verfahren arbeitende Stabilitätsregelung (ESC) wartet also nicht darauf, bis eine kritische Querbeschleunigung des Fahrzeugs tatsächlich vorliegt (Meßwert des Querbeschleunigungs-Sensors), sondern reagiert direkt auf die Lenkbewegungen des Fahrers und sagt hiermit (unter Verwendung weiterer Größen) eine drohende zu hohe Querbeschleunigung voraus. Durch den so vorliegenden zeitlichen Gewinn für den Bremseingriff des ESC kann in vielen Fällen das Fahrzeug noch vor dem Umkippen bewahrt werden. Die Anzahl kritischer Fahrsituationen lässt sich somit verringern.

Die Erfindung wird im folgenden anhand einer Zeichnung näher dargestellt. Diese zeigt in

Fig. 1 eine schematische Darstellung eines Nutzfahrzeuges (Sattelzug) in der Draufsicht, und in

Fig. 2 den Verlauf von Lenkwinkel und Querbeschleunigung (gemessen sowie erwartet) bei einem Spurwechselmanöver eines Sattelzuges bei konstanter Fahrzeuggeschwindigkeit.

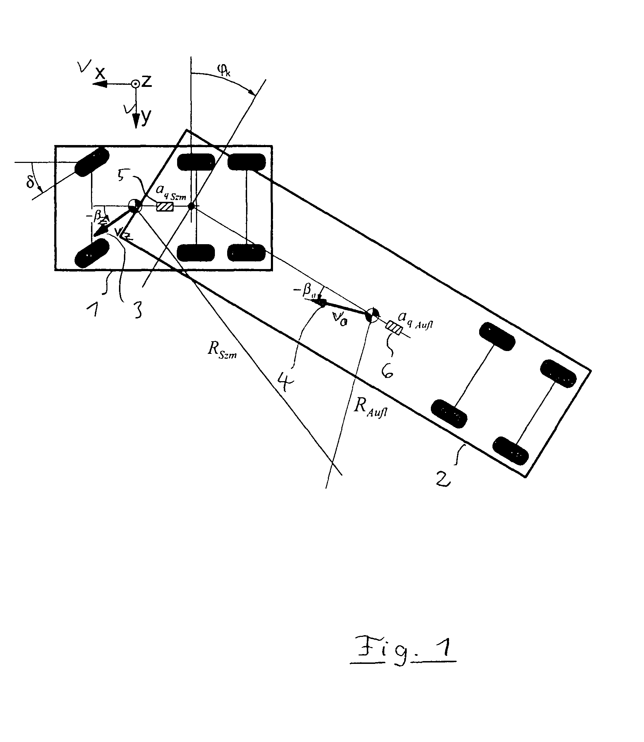

Die Fig. 1 zeigt in schematischer Darstellung einen Sattelzug in der Draufsicht, der sich gerade in einer Linkskurve befindet. Dabei ist mit (1) der Zugwagen und mit (2) der Auflieger bezeichnet. Der Schwerpunkt des Zugwagens (1) bewegt sich mit einer Geschwindigkeit vz in Richtung des Pfeiles 3. Der Schwerpunkt des Aufliegers (2) bewegt sich mit einer Geschwindigkeit va in Richtung des Pfeiles 4.

Die genannten Pfeile 3, 4 gehen jeweils vom Schwerpunkt des Zugwagens bzw. Aufliegers aus, und sind nicht mit den Längsachsen der beiden Fahrzeugteile identisch. Daraus folgt, daß sich das gezeichnete Fahrzeug gerade in einer Kurvenfahrt befindet.

Der Schwimmwinkel des Zugwagens (1), d. h. die Abweichung seiner tatsächlichen Bewegungsrichtung von seiner Längsachse, beträgt -βz. Der entsprechende Schwimmwinkel des Aufliegers beträgt -βa. Dabei bedeutet das Minuszeichen, daß sich das Fahrzeug in einer Linkskurve befindet.

Der Lenkwinkel des Zugwagens ist mit δ bezeichnet. Dies ist der Winkel, um den die Vorderräder des Zugwagens von der Geradeausstellung abweichen.

Der Knickwinkel zwischen Zugwagen und Auflieger beträgt φk.

Der gefahrene Radius im Schwerpunkt des Zugwagens (1) beträgt RSzm (Szm = Sattelzugmaschine), und entsprechend beträgt der gefahrene Radius im Schwerpunkt des Aufliegers (2) RAufl. Letzterer ist naturgemäß kleiner als der gefahrene Radius des Zugwagens.

Zur Messung der tatsächlichen Querbeschleunigungen von Zugwagen (1) und Auflieger (2) ist ein erster Querbeschleunigungssensor (5) zur Messung der Querbeschleunigung aqSzm für den Zugwagen und ein zweiter Querbeschleunigungssensor (6) zur Messung der Querbeschleunigung aqAufl für den Auflieger vorgesehen. Beide Querbeschleunigungssensoren befinden sich etwa am Ort des Schwerpunktes der jeweiligen Fahrzeugteile.

Bei realen Fahrzeugen wird meist aus Kostengründen auf den Beschleunigungssensor im Auflieger verzichtet.

Mit vx und vy sind die Fahrzeuggeschwindigkeiten im Schwerpunkt der Zugmaschine bezeichnet. Dabei gilt der Wert vx für die Längsrichtung und der Wert vy für die Querrichtung der Zugmaschine.

Die oben erläuterten, in der Fig. 1 dargestellten Fahrzeug-Bewegungsgrößen werden ganz oder zum Teil in einer im Zugwagen eingebauten elektronischen Stabilitätsregelung (ESC) verwendet (nicht dargestellt). Zusätzlich zu den Meßwerten des Querbeschleunigungssensors (5) verwendet eine gebräuchliche ESC im allgemeinen noch Sensoren für die Drehzahlen der Räder sowie Meßwerte eines Lenkwinkelsensors und eines Gierratensensors für den Zugwagen. Die genannten Sensoren sind nicht in der Fig. 1 dargestellt, aber dem Fachmann bekannt.

Aus den Werten der Radsensoren können in dem Fachmann bekannter Weise die Beschleunigungswerte der beiden Fahrzeugteile berechnet werden, so daß separate Sensoren für die Fahrzeug-Längsbeschleunigung nicht benötigt werden.

Die genannten Bewegungsgrößen werden innerhalb der ESC softwaremäßig zur Beschreibung eines internen Fahrzeugmodells verwendet. Hierdurch ist der ESC stets bekannt, in welchem Fahrzustand sich ein z.B. schleuderndes Fahrzeug gerade befindet. Über eine entsprechende Logik der ESC kann dann durch Einzelradbremsung in bekannter Weise versucht werden, das Fahrzeug wieder zu stabilisieren.

Gemäß der Erfindung wird aus Teilen der obengenannten Bewegungsgrößen eine zu erwartende Querbeschleunigung aq_erwartet des Fahrzeugs vorherbestimmt. Hierzu werden wenigstens die Größen für Lenkwinkel und für die Fahrzeuggeschwindigkeit benutzt. Die Vorausberechnung kann erfindungsgemäß vorteilhaft mit Hilfe einer Formel, nämlich

$$aq\_erwartet = \delta xVz/(EgxVz+RadstSzm/Vz)$$

erfolgen, worin

δ = Lenkwinkel des Fahrzeugs,
Vz = Schwerpunktsgeschwindigkeit der Sattelzugmaschine,
EG = Eigenlenkverhalten des Fahrzeugs,
RadstSzm = Radstand der Sattelzugmaschine

Wie in Versuchsfahrten erkannt wurde, stellt sich aufgrund der Trägheit des Fahrzeugs, insbesondere des Zugwagens, die durch den eingestellten Lenkwinkel in Verbindung mit der Fahrzeuggeschwindigkeit eigentlich zu erwartende Querbeschleunigung nicht unmittelbar ein. Je dynamischer gelenkt wird, umso größer ist vielmehr die zeitliche Differenz zwischen dem Auftreten der erwarteten Querbeschleunigung und der gemessenen Querbeschleunigung.

Wie bereits erwähnt, kann die zeitliche Differenz einige hundert Millisekunden betragen. Dieser zeitliche Gewinn schafft bei vielen dynamischen Fahrmanövern die einzige Möglichkeit, das Fahrzeug vor dem Umkippen zu bewahren.

Dies trifft besonders auf Sattelzüge zu, da es mit der normalerweise vorhandenen Sensorik nicht möglich ist, eine exakte Aussage über die Höhe der Schwerpunkte von Zugwagen und Auflieger zu treffen. Diese kann je nach Beladung variieren. Bei hohem Schwerpunkt kann erfahrungsgemäß der zeitliche Abstand zwischen dem Erreichen der Anregelschwelle der ESC und der zum Umkippen führenden Querbeschleunigung des Fahrzeugs sehr gering ausfallen.

Die in der obenstehenden Formel enthaltenen Größen werden wie folgt bestimmt.

Der Lenkwinkel der Sattelzugmaschine wird mit einem üblichen Lenkwinkelsensor gemessen.

Die Schwerpunktsgeschwindigkeit der Sattelzugmaschine wird aus deren Radgeschwindigkeiten errechnet, wobei zusätzlich der Lenkwinkel berücksichtigt wird.

Das Eigenlenkverhalten des Fahrzeugs wird von der Elektronik der ESC eingelernt. Grundlage hierfür ist die bekannte Formel für die Giergeschwindigkeit des Fahrzeugs

$$\Psi = \delta \,/\, (\, EGxVz + RadstSzm/Vz \,)$$

mit

$\Psi$ = Giergeschwindigkeit, gemessen mit dem Gierratensensor des ESC

$\delta$ = Lenkwinkel

EG = Eigenlenkverhalten

Vz = Fahrzeuggeschwindigkeit

RadstSzm = Radstand der Sattelzugmaschine

Der Radstand der Sattelzugmaschine ist bekannt und wird in die ESC-Elektronik parametriert.

Stellt man die obige Gleichung nach EG um, erhält man das gesuchte Eigenlenkverhalten. Das Einlernen dieses für das Fahrzeug typischen Wertes erfolgt innerhalb festgelegter Randbedingungen, und zwar bei einer bestimmten Geschwindigkeit, einer bestimmten Querbeschleunigung und bei stabiler Fahrt.

Die erfindungsgemäße Vorhersage der Querbeschleunigung trifft nur dann genau zu, wenn der Reibwert der befahrenen Straße diese Querbeschleunigung auch zuläßt. Daher wird zweckmäßig der Verlauf der durch den Sensor (5) gemessenen tatsächlichen Querbeschleunigung der Sattelzugmaschine während einer Lenkbewegung bewertet und zur Korrektur der vorausberechneten Querbeschleunigung mitverwendet. Falls sich eine aufgrund der vorausberechneten Querbeschleunigung eingeleitete RSC-Bremsaktion aufgrund der gemessenen Querbeschleunigung als überflüssig oder zu stark herausstellt, wird diese zurückgenommen oder abgemindert.

Weiter können vorteilhaft auch die aktuellen Zustände des Fahrzeugmodells innerhalb der ESC-Regelung zur Kontrolle mit herangezogen werden. Liegt z. B. eine Instabilität des Fahrzeugs vor, d.h. ein Zustand, bei dem das Fahrzeug unter- oder übersteuert, dann kann sich die errechnete bzw. erwartete Querbeschleunigung wegen zu geringem Reibwert der Straße voraussichtlich nicht aufbauen. In diesem Fall erfolgt dann im Voraus eine softwaremäßige Korrektur der erwarteten Querbeschleunigung in Richtung geringerer Werte.

Die oben beschriebene Plausibilitätsprüfung durch die Meßwerte des Querbeschleunigungssensors sowie den Zustand des Fahrzeugmodells innerhalb der ESC läuft ständig im Hintergrund ab. Zur Plausibilitätsprüfung werden auch die Meßwerte des Lenkwinkelsensors und eines in einer ESC üblichen Gierratensensors herangezogen.

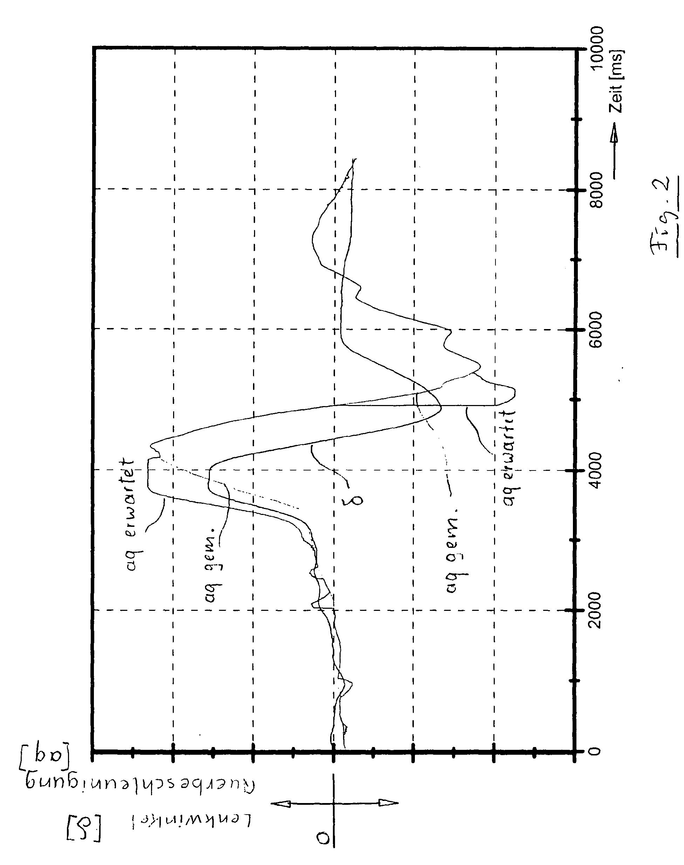

In der Fig. 2 ist der Verlauf von Lenkwinkel $\delta$ und Querschleunigung aq (gemessen sowie erwartet) bei einem Spurwechselmanöver eines Sattelzuges bei konstanter Geschwindigkeit über der Zeit aufgetragen.

Zu Beginn des Fahrmanövers betragen alle Werte etwa Null, d. h. das Fahrzeug befindet sich in einer Geradeausfahrt auf der rechten Spur einer Straße. Nach etwa 2 Sekunden beginnt der Fahrer den Spurwechsel nach links, wobei die Vorderräder nach etwa 4 Sekunden maximal eingeschlagen sind (maximaler Lenkwinkel $\delta$).

Zu diesem Zeitpunkt hat auch die berechnete erwartete Querbeschleunigung aq erwartet ihr Maximum. Dagegen ist das Maximum der tatsächlich gemessenen Querbeschleunigung aq gem. des Fahrzeugs um etwa 200 Millisekunden verschoben, d. h. verzögert. Da sich die erwartete Querbeschleunigung auch tatsächlich eingestellt hat, liegt hier keine Instabilität des Fahrzeugs infolge glatter Straße vor.

In die erwartete Querbeschleunigung aq_erwartet fließt das Eigenlenkverhalten EG des Fahrzeugs mit ein. Diese Größe wird von der ECU der ESC nur annähernd genau gelernt. Dadurch schlagen sich Ungenauigkeiten direkt auf die erwartete Querbeschleunigung durch. Dies ist der Grund, warum in der Fig. 2 der Wert für aq_erwartet höher ausfällt als die gemessene aq.

Nach etwa 4,5 Sekunden ist der Lenkwinkel $\delta$ wieder auf Null zurückgegangen. Dies bedeutet, daß sich das Fahrzeug nunmehr in der linken Spur befindet. Der Fahrer lenkt das Fahrzeug anschließend sofort wieder in die rechte Spur zurück. Nach etwa 5 Sekunden hat der Lenkwinkel δ sein Maximum in die rechte Richtung erreicht. In diesem Fall ist die berechnete bzw. erwartete Querbeschleunigung um etwa 100 Millisekunden gegenüber dem Lenkwinkel verzögert. Die gemessene, tatsächliche Querbeschleunigung ist um etwa weitere 100 Millisekunden verzögert. Es ergibt sich also ein Zeitgewinn von 100 Millisekunden für das Eingreifen der RSC.

Nach etwa 7 Sekunden befinden sich alle drei Werte wieder auf Null, d. h. das Fahrzeug fährt wiederum auf der rechten Straßenseite geradeaus.

Wie aus der Fig. 2 erkennbar ist, läßt sich, wie oben beschrieben, mit Hilfe der berechneten bzw. erwarteten Querbeschleunigung des Fahrzeugs ein beträchtlicher Zeitgewinn für eine eventuelle Bremsreaktion eines ESC erzielen. Hierdurch wird ein erheblicher Sicherheitsgewinn für Fahrer und Fahrzeug erzielt.

Alternativ kann man vorteilhaft eine erwartete Querbeschleunigung auch mit Hilfe einer Tabelle vorausbestimmen. Diese Tabelle wird in Fahrversuchen ermittelt, und enthält für alle Wertepaare von Lenkwinkel und Fahrzeuggeschwindigkeit einen entsprechend gemessenen Wert der erwarteten Querbeschleunigung. Dieser Wert eilt dann ebenfalls der tatsächlichen Querbeschleunigung vor, und kann wie oben beschrieben, vorteilhaft in einer ESC oder RSC verwendet werden.

**Patentansprüche**

1. Verfahren zur Abschätzung einer Querbeschleunigung eines Fahrzeugs, insbesondere zur Verwendung bei Sattelzügen innerhalb einer elektronischen Stabilitätsregelung (ESC) oder einer Umkippverhinderung (RSC) zur Verhinderung des Umkippens des Fahrzeugs in kritischen Fahrsituationen, wobei bei Erreichen einer kritischen Querbeschleunigung eine Warnung des Fahrers und/oder eine automatische Geschwindigkeits-Verringerung des Fahrzeugs erfolgt, und wobei wenigstens eine dem Lenkwinkel entsprechende Größe und eine der Fahrzeuggeschwindigkeit entsprechende Größe bestimmt werden, **dadurch gekennzeichnet, dass** eine erwartete Querbeschleunigung aq_erwartet des Fahrzeugs aus wenigstens den Größen für Lenkwinkel und Fahrzeuggeschwindigkeit mit Hilfe einer Berechnung vorausbestimmt wird, und an Stelle einer gemessenen Querbeschleunigung in der Stabilitätsregelung (ESC) oder Umkippverhinderung (RSC) verwendet wird.

2. Verfahren nach Anspruch 1, **dadurch gekennzeichnet, dass** als Größe für die Fahrzeuggeschwindigkeit die Schwerpunktsgeschwindigkeit der Zugmaschine verwendet wird.

3. Verfahren nach einem oder beiden der Ansprüche 1 und 2,

**dadurch gekennzeichnet, dass** zur Bestimmung der erwarteten Querbeschleunigung zusätzlich der Radstand und/oder das Eigenlenkverhalten des Fahrzeugs berücksichtigt werden.

4. Verfahren nach einem oder mehreren der Ansprüche 1 bis 3, **dadurch gekennzeichnet, dass** zusätzlich der Verlauf einer gemessenen Querbeschleunigung des Fahrzeugs während einer Lenkbewegung ausgewertet wird, und zur Korrektur der erwarteten Querbeschleunigung benutzt wird.

5. Verfahren nach einem oder mehreren der Ansprüche 1 bis 4, **dadurch gekennzeichnet, dass** zusätzlich Signale einer eventuell im Fahrzeug vorhandenen Stabiltitäts-Regelung (ESC) bezüglich einer Instabilität des Fahrzeugs zur Berechnung der erwarteten Querbeschleunigung berücksichtigt werden.

6. Verfahren nach einem oder mehreren der Ansprüche 1 bis 5, **dadurch gekennzeichnet, dass** die erwartete Querbeschleunigung mit Hilfe der Formel

$$aq\_erwartet = \delta xVz/(EGxVz+RadstSzm/Vz)$$

berechnet wird, worin δ= Lenkwinkel
EG = Eigenlenkverhalten des Fahrzeugs
Vz = Schwerpunktsgeschwindigkeit der Sattelzugmaschine
RadstSzm = Radstand der Sattelzugmaschine

7. Verfahren zur Abschätzung einer Querbeschleunigung eines Fahrzeugs, insbesondere zur Verwendung bei Sattelzügen innerhalb einer elektronischen Stabilitätsregelung (ESC) oder einer Umkippverhinderung (RSC) zur Verhinderung des Umkippens des Fahrzeugs in kritischen Fahrsituationen, wobei bei Erreichen einer kritischen Querbeschleunigung eine Warnung des Fahrers und/oder eine automatische Geschwindigkeits-Verringerung des Fahrzeugs erfolgt, und wobei wenigstens eine dem Lenkwinkel entsprechende Größe und eine der Fahrzeuggeschwindigkeit entsprechende Größe bestimmt werden,
**dadurch gekennzeichnet, dass** eine erwartete Querbeschleunigung des Fahrzeugs einer in Fahrversuchen ermittelten Tabelle entnommen wird, welche zu Wertepaaren von Lenkwinkel und Fahrzeuggeschwindigkeit die jeweilige zugehörige Querbeschleunigung enthält.

Fig. 1

Fig. 2